**Europäisches Patentamt**

**European Patent Office**

**Office européen des brevets**

(19)

(11) Veröffentlichungsnummer: **0 253 078**
**B1**

(12) **EUROPÄISCHE PATENTSCHRIFT**

(45) Veröffentlichungstag der Patentschrift: **19.09.90**

(51) Int. Cl.⁵: **G 01 D 9/20,** G 06 F 3/12

(21) Anmeldenummer: **87106010.9**

(22) Anmeldetag: **24.04.87**

(54) **Verfahren zum Aufbereiten von Steuerdaten für einen Matrixdrucker.**

(30) Priorität: **02.07.86 CH 2657/86**

(43) Veröffentlichungstag der Anmeldung:
**20.01.88 Patentblatt 88/03**

(45) Bekanntmachung des Hinweises auf die
Patenterteilung:
**19.09.90 Patentblatt 90/38**

(84) Benannte Vertragsstaaten:
**AT CH DE FR GB IT LI NL SE**

(56) Entgegenhaltungen:
**DE-A-2 835 633**

**ELECTRONIQUE APPLICATIONS, Band 34,
Januar 1984, Seiten 91-99, Paris, FR; B.
MARCHAL: "Tracé de courbes paramétriques
sur imprimante"
COMPUTER DESIGN, Band 22, Dezember 1983,
Seiten 89,90,92,94,96,98,100, Winchester, US; P.
CARON et al.: "Graphics software standards
promote device independence"**

(73) Patentinhaber: **SIEMENS-ALBIS
AKTIENGESELLSCHAFT
PV/Patente und Verträge Postfach
CH-8047 Zürich (CH)**

(84) **CH LI**

(73) Patentinhaber: **Siemens Aktiengesellschaft
Wittelsbacherplatz 2
D-8000 München 2 (DE)**

(84) **DE FR GB IT NL SE AT**

(72) Erfinder: **Schaad, Werner
z. Engel 91
CH-8216 Oberhallau (CH)**

## Beschreibung

Die vorliegende Erfindung betrifft ein Verfahren gemäss dem Oberbegriff des Patentanspruches 1.

In vielen technischen Anwendungsgebieten werden von einer Datenquelle gelieferte Daten, wie z.B. eine Reihe zeitabhängiger Messwerte, oft grafisch auf einem Bildschirm, normalerweise in Kurvenform dargestellt. Vielfach besteht dann auch der Wunsch zur Erstellung einer gedruckten Wiedergabe dieser Kurve auf einem Aufzeichnungsträger. Als Drucker kann dabei beispielsweise ein Matrixdrucker vorgesehen werden, dessen Drucknadeln so angesteuert werden, dass die zur Erzeugung des Druckbildes notwendigen Informationen punktweise auf den Aufzeichnungsträger übertragen werden. Die auf den Aufzeichnungsträger zu übertragende Darstellung ist hierzu in einer Bitmap gespeichert, die für jeden auf dem Aufzeichnungsträger ansteuerbaren Punkt (Pixel) eine Information darüber enthält, ob der Punkt Bestandteil der Darstellung ist und daher geschrieben werden muss oder ob es sich um einen "Leerpunkt" handelt. Bei einer Auflösung von beispielsweise 800 × 800 Punkten erfordert diese Bitmap somit einen Speicher von mindestens 640 kBit, bei mehrfarbiger Darstellung ist ein noch grösserer Speicher erforderlich. Dabei ist die Anzahl der "Leerpunkte" inder Regel um ein Vielfaches grösser als die Anzahl der "Bildpunkte". Zur Uebertragung einer derart grossen Informationsmenge zum Drucker bedarf es einer entsprechend grossen Uebertragungszeit. Ferner ergibt sich dadurch, dass der Drucker auch mit den Informationen für die "Leerpunkte" angesteuert wird, eine grosse Druckzeit.

Der vorliegenden Erfindung liegt daher die Aufgabe zugrunde, ein Verfahren der eingangs genannten Art anzugeben, mit dem die zur grafischen Abbildung von aus einer Datenquelle stammenden Daten mit einem Matrixdrucker erforderlichen Befehlsfolgen — nachfolgend Steuerdaten genannt — so aufbereitet werden, dass sich bei minimalem Speicheraufwand ein rationeller und dementsprechend beschleunigter Druckvorgang ergibt. Die Lösung dieser Aufgabe gelingt erfindungsgemäss mit einem Verfahren gemäss dem Kennzeichen des Patentanspruches 1. Vorteilhafte Weiterbildungen des Verfahrens sind in weiteren Ansprüchen angegeben.

Die Steuerdaten für den Matrixdrucker werden gemäss dem vorgeschlagenen Verfahren derart aufbereitet, dass der Schreibkopf des Druckers beim Drucken in Schreibstreifen, die fortlaufend horizontal von links nach rechts auf dem Aufzeichnungsträger verlaufen und deren Höhe der Anzahl Druckelemente des Schreibkopfes entspricht, auf dem Aufzeichnungsträger fortbewegt wird. Die "Leerstellen" in der auf dem Aufzeichnungsträger wiederzugebenden Darstellung werden dabei vom Schreibkopf durch Einfügen entsprechender Tabulatorbefehle "übersprungen". Ein mit derart aufbereiteten Steuerdaten angesteuerter Matrixdrucker lässt sich wie ein Plotter betreiben, dessen Schreibkopf hinsichtlich Druckweg optimiert ist und bei dem der Aufzeichnungsträger nur in Vorwärtsrichtung transportiert werden muss. Es ergibt sich nebst einer reduzierten Beanspruchung des Rechners für die Uebertragung der Steuerdaten zum Drucker bei relativ geringem Speicheraufwand auch ein rationeller Betrieb des Druckers mit einer minimalen Druckzeit. Benutzerseitig wird nur verlangt, dass die abzubildenden Daten als Koordinatenpaare zur Verfügung stehen. Der Benutzer muss sich nicht um eine optimierte Betriebsweise des Druckers kümmern.

Nachfolgend wird das Verfahren anhand von Zeichnungen beispielsweise näher erläutert. Dabei zeigt:

Fig. 1 ein Prinzipschaltbild zur Erläuterung des Verfahrens

Fig. 2 Einzelheiten einer Kurve zur Erläuterung der Aufbereitung der diese Kurve erzeugenden Steuerdaten eines Matrixdruckers

Fig. 3 einen Auszug aus dieser Kurve

Fig. 4 weitere Einzelheiten zur Aufbereitung der Steuerdaten

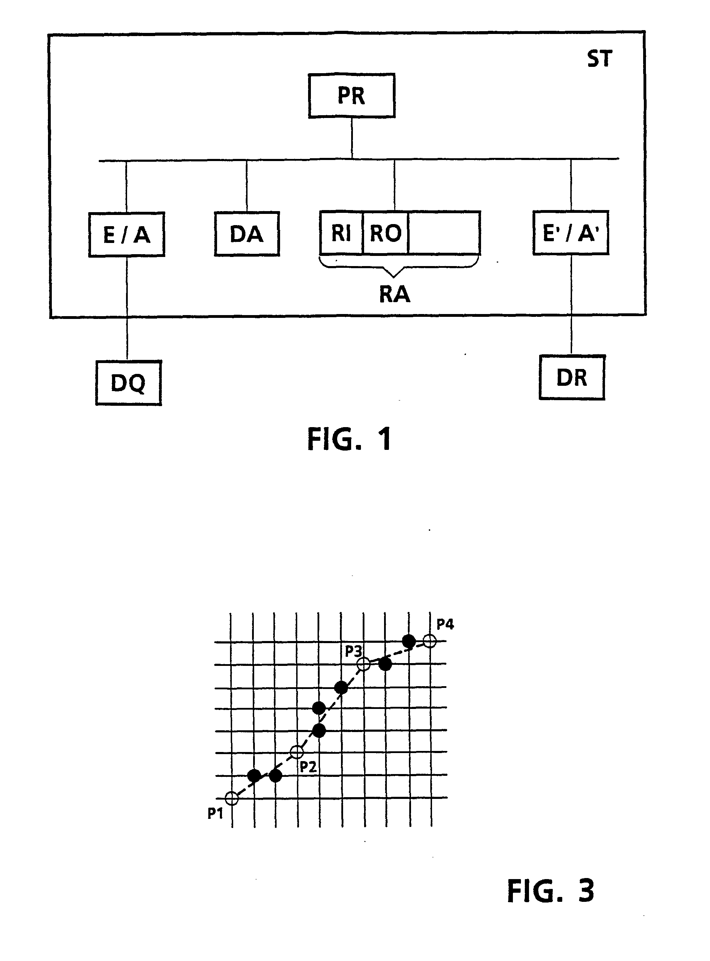

Fig. 1 zeigt eine prinzipielle Anordnung für die Ansteuerung eines Matrixdruckers DR, dessen Steuerdaten nach dem erfindungsgemässen Verfahren aufbereitet werden. Die Anordnung weist eine programmierbare Steuereinrichtung ST mit einem Rechner PR (Mikroprozessor) auf, an den in bekannter Weise über einen Bus ein Datenspeicher RA, ein Programmspeicher DA und Ein-/Ausgabeeinheiten E/A und E'/A' angeschlossen sind. Ueber diese Ein-/Ausgabeeinheiten sind eine Datenquelle DQ bzw. der Drucker DR an der Steuereinrichtung ST angeschlossen. Der Datenspeicher RA weist u.a. einen Eingangsdatenspeicher RI und einen Steuerdatenspeicher RO auf. Der Steuerdatenspeicher RO enthält die in der Steuereinrichtung ST aus den Eingangsdaten erzeugten Steuerdaten für den Drucker DR. Die Steuereinrichtung ST kann mit einem handelsüblichen Mikrocomputer realisiert werden. Die Daten gelangen von der Datenquelle DQ in bestimmter Reihenfolge zum Eingangsdatenspeicher RI. Bei den Daten handle es sich um eine Reihe mit einer beliebigen Anzahl von zeitabhängigen Messwerten M, die von einer Messeinrichtung ermittelt und fortlaufend in den Eingangsdatenspeicher RI eingetragen werden. Die Daten bestehen somit jeweils aus 2 Komponenten, nämlich dem eigentlichen Messwert und einem zugehörigen Zeitwert. Aufgabe ist es nun, diese Reihe von Daten durch entsprechende Ansteuerung mit dem Matrixdrucker DR auf einem Aufzeichnungsträger grafisch in Form einer zeitabhängigen Kurve M(t) festzuhalten, wobei eine optimierte Betriebsweise des Matrixdruckers DR anzustreben ist. Die Aufbereitung der hierzu notwendigen Steuerdaten für den Drucker DR erfolgt durch die Steuereinrichtung ST aufgrund im Programmspeicher DA enthaltener Anweisungen. Die aufbereiteten Steuerdaten werden dann im Steuerdatenspeicher RO niedergelegt, von wo sie nach Einleitung des Druckvorganges zum Drucker DR übertragen werden.

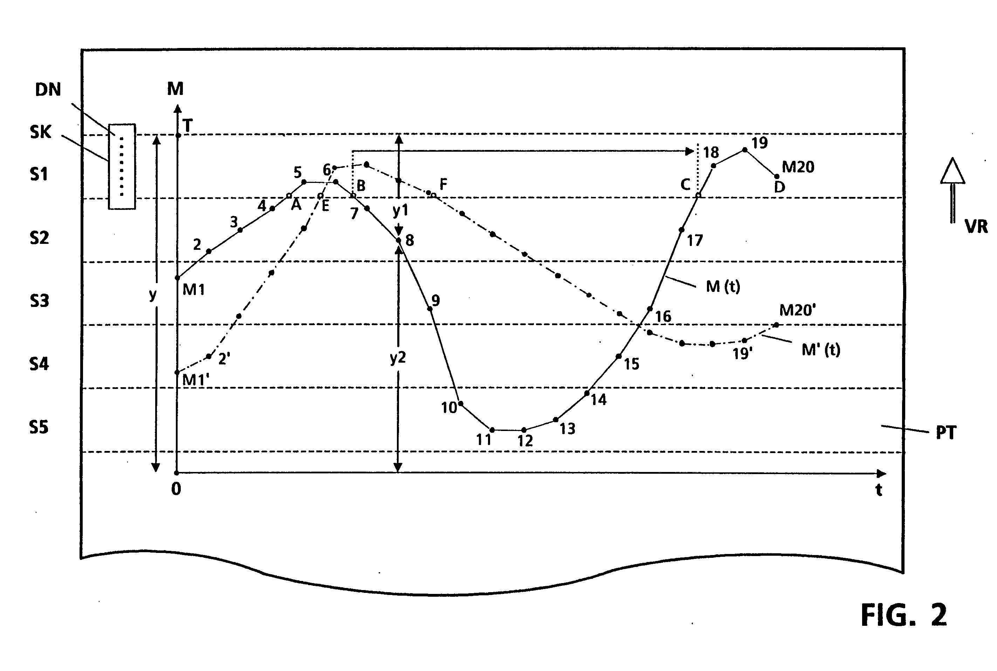

Die Aufbereitung der Steuerdaten für den Drucker DR aufgrund der im Programmspeicher DA enthaltenen Anweisungen wird unter Beizug von Fig. 2 erläutert. Diese zeigt im wesentlichen einen Ausschnitt aus einem Aufzeichnungsträger PT, der in bekannter Weise in einen Matrixdrucker eingespannt ist und bei entsprechender Befehlsgabe an den Drucker DR in der mit einem Pfeil angegebenen Richtung VR fortbewegt werden kann. Ueber dem Aufzeichnungsträger PT ist der Schreibkopf SK des Druckers durch entsprechende Befehlsgabe senkrecht zur Vorschubrichtung des Aufzeichnungsträgers PT von links nach rechts und umgekehrt verschiebbar. Der Schreibkopf SK ist mit mehreren einzeln ansteuerbaren in einer Linie übereinander angeordneten Drucknadeln DN ausgestattet. Dadurch kann durch eine die Fortbewegung des Schreibkopfes SK und den Vorschub des Aufzeichnungsträgers PT beinhaltende Befehlsfolge an den Drucker DR der Schreibkopf SK an jeden beliebigen Ort über dem Aufzeichnungsträger PT gebracht werden. Somit lassen sich innerhalb eines vorgegebenen Rasters — gegeben einerseits durch den Abstand der Drucknadeln DN und andererseits durch die Länge eines Vorschubschrittes des Schreibkopfes SK — durch Aktivierung der entsprechenden Drucknadeln DN des Schreibkopfes SK an beliebiger Stelle auf dem Aufzeichnungsträger PT ein oder mehrere Druckzeichen gleichzeitig in Form von Punkten — im folgenden Druckpunkte genannt — erzeugen. Ausserdem weist die Druckersteuerung in bekannter Weise feste Zeichensätze mit vorgegebenen Zeichen, wie z.B. alphanummerischen Zeichen auf, die mittels entsprechender Befehle ebenfalls durch die Steuereinrichtung ST abgerufen und ausgedruckt werden können. Eine zur Erzeugung eines Druckpunktes erforderliche Befehlsfolge weist in bekannter Weise mindestens je einen Befehl für die Position des Schreibkopfes SK auf dem Aufzeichnungsträger PT, die Nummern der jeweils zu aktivierenden Drucknadeln DN sowie wenn nötig den Vorschub des Aufzeichnungsträgers PT auf. Gegebenenfalls kommt noch ein Befehl für eine bestimmte Druckfarbe hinzu. Alle diese Befehle gehören zum verfügbaren Befehlssatz des Druckers.

Mit einem derart ausgestatteten Drucker DR soll nun die in Fig. 2 dargestellte Kurve M(t), bestehend aus z.B. 20 aus der Datenquelle DQ stammenden zeitabhängigen Messwerten, auf dem Aufzeichnungsträger PT wiedergegeben werden, wobei die Zeitachse in horizontaler Richtung, d.h. in der Bewegungsrichtung des Schreibkopfes SK verlaufe. Die Aufbereitung der hiezu notwendigen Steuerdaten für den Drucker DR erfolgt in der Steuereinrichtung ST in folgenden aufeinanderfolgenden Schritten:

In einem ersten Schritt wird die auf dem Aufzeichnungsträger PT für die Darstellung beanspruchte Fläche — im folgenden Formular genannt — und darin ein Bezugspunkt, nämlich der Nullpunkt 0 eines Koordinatensystems definiert, auf dessen Ordinatenachse die Messwerte und auf dessen Abszissenachse die zugehörigen Zeitwerte aufzutragen sind.

In einem zweiten Schritt wird in diesem Koordinatensystem ein Massstab für die Ordinatenachse und ein Massstab für die Abszissenachse festgelegt, wobei als Einheit der Abstand zwischen zwei durch den Drucker DR erzeugbaren aufeinanderfolgenden Druckpunkten (Pixel) gewählt wird. Jeder in diesem Koordinatensystem erzeugbare Punkt kann somit durch ein Wertepaar, bestehend aus Abszisse und Ordinate, dargestellt werden, wobei beide Werte je durch eine Anzahl von Druckpunkten bezogen auf den Nullpunkt 0 definiert sind.

In einem dritten Schritt werden die im Eingangsdatenspeicher RI vorliegenden Messwerte M nun in entsprechende Koordinatenwertepaare umgerechnet, d.h. für jeden Messwert M und den zugehörigen Zeitwert wird der Wert für die Abszisse und die Ordinate in einer Anzahl Punkte im gewählten Koordinatensystem ausgedrückt. Da der Nullpunkt des Koordinatensystems, in weichem die Kurve M(t) wiedergegeben werden soll, nicht mit dem Startpunkt T des Schreibkopfes SK auf dem Aufzeichnungsträger PT übereinstimmt — der Startpunkt T ist gegenüber dem Nullpunkt 0 um einen bestimmten Abstand auf der Ordinate nach oben verschoben — müssen die Ordinaten der eben berechneten Messwerte auf diesen Startpunkt T bezogen werden. Wenn y die Verschiebung zwischen dem Nullpunkt 0 und dem Startpunkt T und y2 die Ordinate z.B. des dem Punkt 8 der Kurve M(t) entsprechenden Messwertes ist, ergibt sich die auf den Startpunkt T bezogene Ordinate y1 dieses Messwertes aus der Gleichung $y1 = y - y2$. Für die Abszisse kann eine solche Umrechnung entfallen, da die Abzissen des Start- und des Nullpunktes übereinstimmen und daher der Initialzustand des Schreibkopfes SK für dessen Bewegung in horizontaler Richtung ohne weiteres entsprechend gewählt werden kann.

Nach diesen ersten drei Bearbeitungsschritten liegt in einem Zwischenspeicher der Steuereinrichtung ST eine Reihe von für das gewählte Formular berechneten Wertepaaren (Ordinate, Abszisse) der 20 Messwerte M vor.

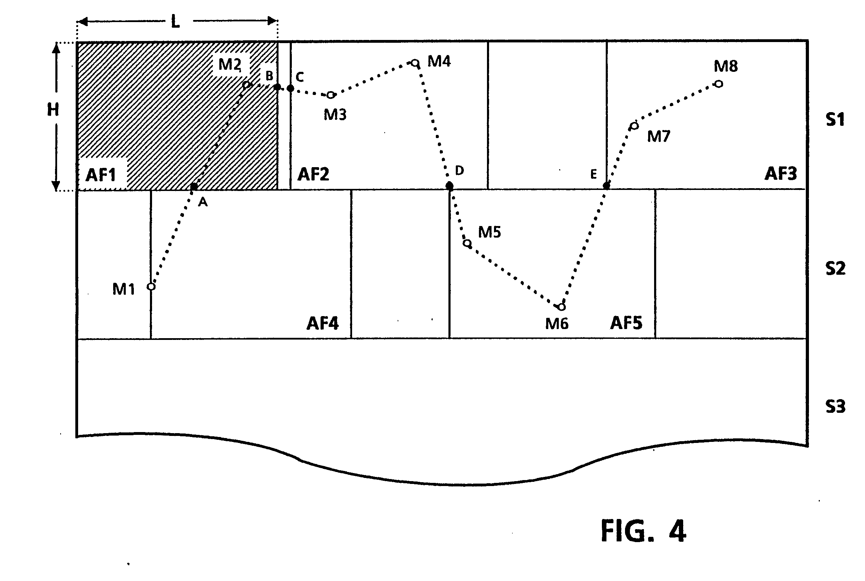

In einem vierten Schritt werden diese Wertepaare nun in der nachfolgend beschriebenen Weise weiterbearbeitet. Dabei wird davon ausgegangen, dass der Schreibkopf SK des Druckers DR während dem Druckvorgang von links nach rechts schreibt und dabei jeweils aufeinanderfolgende Schreibstreifen S überstreicht. Ein sich von links nach rechts über das Formular erstreckender Schreibstreifen S hat eine Höhe, die der Anzahl Drucknadeln DN im Schreibkopf SK entspricht. Dabei ist der Vorschub des Aufzeichnungsträgers PT so gewählt, dass beim Uebergang von einem Schreibstreifen zum nächstfolgenden die Position der obersten Drucknadel DN des Schreibkopfes SK an die Position der untersten Drucknadel DN im vorhergehenden Schreibstreifen anschliesst. In Fig. 2 sind fünf derartige Schreibstreifen S1... S5 angedeutet. Die Messwerte M im erwähnten Zwischenspeicher werden nun zunächst "streifenweise" durchsucht, d.h. es werden Paare von aufeinanderfolgenden Messwerten ermittelt, von denen auf ihrer Verbindungsgeraden liegende Zwischenpunkte in den betrachteten Schreibstreifen fallen. Es fallen dabei Paare von aufeinanderfolgenden Messwerten in Betracht, bei denen entweder beide Messwerte oder nur ein Messwert im betrachteten Schreibstreifen liegen oder aber ein Messwert oberhalb und der andere Messwert unterhalb des betrachteten Schreibstreifens liegt. Letzterer Fall trifft in Fig. 2 bei Betrachtung des Schreibstreifens S4 auf das den Punkten 9 und 10 entsprechende Messwertepaar zu. Beim Suchvorgang für den Schreibstreifen S1 trifft die genannte Bedingung auf die Messwertpaare 4/5, 5/6, 6/7, 17/18, 18/19 und 19/20 zu. Für jedes dieser Messwertpaare wird dann die Lage der für die geradlinige Verbindung der beiden Messwerte in der Kurvendarstellung notwendigen und durch die Nadeln DN des Schreibkopfes SK erzeugbaren Zwischdruckpunkte — nachfolgend auch Zwischenpunkte genannt — berechnet. Diese Berechnung kann nach dem an sich bekannten Algorithmus von Bresenham erfolgen, wie er beispielsweise in Newmann/Sproull, "Principles of interactive Computer graphics", Tokyo 1979 beschrieben ist. Mit diesem Algorithmus werden die der geradlinigen Verbindung zwischen einem gegebenen Anfangs- und einem gegebenen Endpunkt am nächsten liegenden Zwischenpunkte ermittelt, die in dem durch die Anordnung der Drucknadeln DN des Schreibkopfes SK gegebenen Raster erzeugbar sind. Einen Ausschnitt aus einem derart berechneten und erzeugten Kurvenzug zeigt Fig. 3. Darin sind vier den Messwerten entsprechende Stützpunkte P1 ... P4 und strichliert ihre geradlinigen Verbindungen eingezeichnet. Dazwischen sind die mit dem erwähnten Algorithmus ermittelten Zwischenpunkte schwarz eingezeichnet, weiche jeweils auf den der Verbindungsgeraden am nächsten liegenden Rasterpunkten liegen. ist die Verbindungsgerade weniger steil als 45 Grad, wird zu jedem Abszissenwert ein Ordinatenwert ermittelt. Ist die Verbindungsgerade jedoch steiler als 45 Grad, wird zu jedem Ordinatenwert ein Abszissenwert berechnet. Letzterer Fall trifft auf die Verbindung von P2 nach P3 zu.

Für die im Zusammenhang mit dem Schreibstreifen S1 betrachteten Messwertepaare 5/6, 18/19 und 19/20 liegen alle Zwischenpunkte innerhalb des Schreibstreifens S1. Deshalb wird die Befehlsfolge für diese Zwischenpunkte mit einem Steuerbefehl versehen, der den Schreibkopf SK in die richtige Position bringt und jeweils bei Erreichen dieser Position veranlasst, die betreffenden Nadeln DN zu aktivieren und die entsprechenden Zwischendruckpunkte zu erzeugen. Im Gegensatz dazu liegen für die übrigen Messwertepaare 4/5, 6/7 und 17/18 nicht alle Zwischenpunkte im betrachteten Schreibstreifen S1. In diesem Fall wird die Befehlsfolge nur derjenigen Zwischenpunkte mit dem Druckbefehl versehen, die sich innerhalb des Schreibstreifens S1 befinden. Nebst den Zwischenpunkten werden in gleicher Weise auch die Befehlsfolgen für die im betrachteten Schreibstreifen S1 liegenden Anfangspunkte 5, 6, 18, 19 und 20 der Messwertepaare 5/6, 6/7, 18/19, 19/20 mit dem Druckbefehl versehen. Der Endpunkt (zweiter Wert) eines Messwertepaares tritt jeweils als Anfangspunkt des nächstfolgenden Paares auf und wird daher vorteilhafterweise erst dann mit einem Druckbefehl versehen. Somit wird er im Hinblick auf ein gleichmässiges Druckbild wie alle anderen Punkte nur einmal gedruckt. Nur der Endpunkt des letzten Messwertepaares 19/20 wird mit dem Druckbefehl versehen. Somit liegen in der richtigen Reihenfolge die Befehlsfolgen mit allen Steuerbefehlen vor, die zum Drucken der innerhalb des Schreibstreifens S1 liegenden Teile AB und CD der Kurve M(t) von links nach rechts notwendig sind. Offen bleibt das zwischen diesen beiden Teilen AB und CD liegende Zwischenstück BC im Schreibstreifen S1, in welchem nichts auszudrukken ist.

Um den Schreibkopf SK beim Druckvorgang vom letzten sich noch im Schreibstreifen S1 befindlichen Zwischenpunkt B des Kurventeils AB direkt, d.h. unverzüglich zum ersten sich wiederum im Schreibstreifen S1 befindlichen Zwischenpunkt C des Kurventeils CD zu bringen, wird wie folgt vorgegangen:

Sobald beim genannten Suchvorgang ein Paar von Messwerten auftritt, bei dem beide Werte ausserhalb (entweder oberhalb oder unterhalb) des betrachteten Schreibstreifens S1 liegen — was im vorliegenden Fall für das Messwertpaar 7/8 zutrifft — dann ist der letzte im Schreibstreifen S1 befindliche Punkt der Zwischenpunkt B.

Wenn bei der weiteren Suche wiederum ein Messwertepaar mit im betrachteten Schreibstreifen S1 liegenden Punkten auftritt, wird der erste wiederum im Schreibstreifen S1 liegende Punkt ermittelt. Im vorliegenden Beispiel ist dies der Zwischenpunkt C des Messwertepaares 17/18. Demzufolge wird im Anschluss an den Druckbefehl für den zuvor letzten Zwischenpunkt B ein Tabulatorbefehl ("Springe zu Punkt C") eingefügt, der den Schreibkopf SK nach dem Drucken dieses Zwischenpunktes B direkt zum ersten wiederum im Schreibstreifen S1 befindlichen Zwischenpunkt C verschiebt. In gleicher Weise wird zum Erreichen des Zwischenpunktes A vorgegangen, der als erster auszudruckender Punkt im Schreibstreifen S1 liegt. Dabei wird der Schreibkopf SK mit einem entsprechenden Tabulatorbefehl aus der Ausgangsstellung direkt zum Zwischenpunkt A verschoben.

Nach Erreichen des Messwertes 20 wird der beschriebene Suchvorgang für den zweiten und alle weiteren Schreibstreifen S wiederholt und in gleicher Weise die zur Vervollständigung der Kurve M(t) notwendigen Steuerdaten aufbereitet. Für den Schreibstreifen 2 werden die Messwertpaare 1/2, 2/3, 3/4, 4/5, 6/7, 7/8, 8/9, 16/17 und 17/18 in der beschriebenen Weise behandelt.

Das beschriebene Verfahren lässt sich auch simultan auf mehrere je in einer Kurve darzustellende Messwertreihen anwenden. Voraussetzung dazu ist, dass diese Reihen getrennt in den Eingangsdatenspeicher RI gelangen. Nach der Umrechnung der Daten gemäss Schritt 3 werden sie in getrennte Zwischenspeicher der Steuereinrichtung ST eingetragen. Davon ausgehend lassen sich die Steuerdaten für den Druck einer Kurve für jede Messwertreihe aufbereiten. Zur Erläuterung des Vorgehens in diesem Fall ist in Fig. 2 noch eine zweite Kurve M'(t) strichpunktiert eingezeichnet. Die Messwerte werden nun für die beiden Kurven M(t) und M'(t) getrennt schreibstreifenweise durchsucht. Begonnen wird mit der Kurve M(t), die innerhalb des Schreibstreifens S1 vor der Kurve M'(t) beginnt. Wie beschrieben werden zunächst die Steuerdaten für den Kurvenabschnitt AB der Kurve M(t) erzeugt und auf den Steuerdatenspeicher RO übertragen. Hierauf wird der im Schreibstreifen S1 am weitestens links liegende noch nicht erfasste Punkt — im vorliegenden Falle der Punkt E der Kurve M'(t) — ermittelt und im Anschluss an die Befehlsfolge für den Punkt B der Kurve M(t) ein Tabulatorbefehl eingefügt, der den Schreibkopf SK unmittelbar zum Punkt E zurücksetzt.

Hierauf erfolgt die Aufbereitung der Steuerdaten für den Abschnitt EF der Kurve M'(t). Anschliessend wird wiederum der am weitesten links liegende noch nicht gezeichnete Punkt im Schreibstreifen S1 ermittelt diesmal ist es der Punkt C der Kurve M(t) — und im Anschluss an die Befehlsfolge für den Punkt F der Kurve M'(t) ein Positionierbefehl eingefügt, der den Schreibkopf SK unmittelbar vom Punkt F zum Punkt C bringt.

Dann werden die Steuerdaten zum Drucken des Abschnittes CD der Kurve M(t) erzeugt. Auf diese Weise lassen sich gleichzeitig mehrere Kurven darstellen, wobei durch Einfügung eines entsprechenden Befehls in den Befehlsfolgen für die einzelnen Kurven bei Verwendung eines entsprechend ausgerüsteten Druckers die Kurven auch verschiedenfarbig dargestellt werden können.

Die Darstellung ist nicht auf die vom Drucker gegebenen Farben beschränkt. Weitere Farben können sehr einfach durch "Ueberdrucken" aus mehreren Farben erzeugt werden. Hierzu wird jeweils nach dem Drucken des letzten Punktes in einem Streifen der Drucker veranlasst, auf eine bestimmte andere Farbe umzuschalten und anschliessend alle Punkte dieses Streifens erneut von links nach rechts auszudrucken. Dabei werden die vorher mit einer bestimmten Farbe gedruckten Punkte mit der neuen Farbe überdruckt, wodurch sich nach dem Prinzip der additiven Farbmischung weitere Farben, wie z.B. orange, erzeugen lassen. Dadurch, dass der Aufzeichnungsträger PT zwischen den beiden aufeinanderfolgenden Druckvorgängen nicht verschoben werden muss, ergibt sich eine optimale Ueberdeckung der "zwei" Kurven und damit ein einwandfreies Druckbild.

Um bei der zuvor beschriebenen Weiterbearbeitung (4. Schritt) der in einem Zwischenspeicher der Steuereinrichtung ST vorliegenden Wertepaare (Ordinate, Abszisse) der 20 Messwerte möglichst wenig Platz im Arbeitsspeicher der Steuereinrichtung ST beanspruchen zu müssen, kann wie nachstehend anhand von Fig. 4 erläutert vorgegangen werden. Fig. 4 zeigt einen Ausschnitt aus dem in Streifen S1, S2, S3... unterteilten Formular, auf dem die Messwerte M1.... M8 aufzutragen sind. Der für die hier zu beschreibende Weiterverarbeitung verwendete Bereich des Arbeitsspeichers kann beispielsweise eine "Breite" H von 8 (entsprechend der Anzahl Drucknadeln DN des Schreibkopfes SK) und eine "Länge" L von 20 Druckpunkten aufweisen, d.h. er kann mit max. 20 Spalten zu je 8 Druckpunkten beschrieben werden und stellt somit einen definierten Ausschnitt — im folgenden Arbeitsfeld AF genannt — von 160 Druckpunkten des Formulars dar. Im Ausgangszustand befindet sich das Arbeitsfeld in der oberen linken Ecke des Formulars (Arbeitsfeld AF1), d.h. es definiert die ersten möglichen 160 Druckpunkte im Streifen S1. Fig. 4 bezieht sich nicht auf dieses Beispiel, sie gibt die Verhältnisse lediglich qualitativ wieder. Im Zuge der Bearbeitung werden nun zunächst für das Messwertepaar M1/M2 wie beschrieben die Zwischenpunkte ermittelt, anschliessend in gleicher Weise die Zwischenpunkte für das folgende Messwertepaar M2/M3. Ein Teil der Zwischenpunkte des Messwertpaares M2/M3 liegt ausserhalb des definierten Arbeitsfeldes AF1. Daher wird die Berechnung abgebrochen, sobald der erste ausserhalb des Arbeitsfeldes AF1 liegende Zwischenpunkt ermittelt wird. Alle innerhalb des Arbeitsfeldes AF1 liegenden Punkte werden mit der für den Druck notwendigen Befehlsfolge versehen und hierauf wird der inhalt des ganzen Arbeitsfeldes AF1 an den Steuerdatenspeicher RO übertragen. Dieser enthält somit alle Steuerdaten zum Ausdrucken des zwischen den Punkten A und B liegenden Kurventeiles. Nun wird das Arbeitsfeld AF neu definiert, indem es um seine Länge nach rechts verschoben wird. Das neu definierte Arbeitsfeld AF2 schliesst so an das vorhergehende Arbeitsfeld AF1 an, dass der erste vorher nicht mehr im Arbeitsfeld AF1 liegende Zwischenpunkt C nun in der ersten Spalte des neuen Arbeitsfeldes AF2 liegt. Die zuvor für das Messwertepaar M2/M3 abgebrochene Berechnung der Zwischenpunkte wird beim Punkt C nun fortgesetzt und auf die folgenden Messwertepaare ausgedehnt. Im Zuge der weiteren Bearbeitung wird festgestellt, dass für das Messwertepaar M5/M6 und folgende kein Zwischenpunkt mehr im Arbeitsfeld AF2 und erst der Zwischenpunkt E des Messwertepaares M6/M7 wieder im Schreibstreifen S1 liegt.

Demzufolge wird im Anschluss an die Befehlsfolge für den Zwischenpunkt D ein Positionsbefehl (Tabulator) eingefügt, der den Schreibkopf SK veranlasst, sich unmittelbar zum Zwischenpunkt E zu verschieben. Hierauf wird der Inhalt des Arbeitsfeldes AF2 (Zwischenpunkte des Abschnittes CD) auf den Steuerdatenspeicher RO übertragen und ein neues in der Spalte des Zwischenpunktes E beginnendes Arbeitsfeld AF3 definiert, um den weiteren Verlauf der Kurve im Schreibstreifen S1 in Steuerdaten für den Drucker umzusetzen. Nach der Bearbeitung des Messwertepaares M7/M8 und dem Uebertragen der Steuerdaten für den Abschnitt E bis M8 an den Steuerdatenspeicher RO wird das nächste Arbeitsfeld AF4 im Schreibstreifen S2 — beginnend in der Spalte des Anfangspunktes M1 — definiert und auch die sich in diesem Streifen befindlichen Punkte der Kurve wie beschrieben in Steuerdaten für den Drucker umgesetzt. Bei Vorliegen von mehreren Kurven werden die Steuerdaten der Zwischenpunkte aller in das jeweilige Arbeitsfeld AF fallenden Kurvenpunkte aufbereitet und getrennt für die einzelnen Kurven an den Steuerdatenspeicher RO übertragen.

Mit dem beschriebenen Vorgehen wird die mit dem Drucker zu erzeugende Wiedergabe in Teilstücken von der Grösse des an sich beliebig gross wählbaren Arbeitsfeldes AF aufbereitet, so dass nur ein relativ geringer Aufwand an Arbeitsspeicher in der Steuereinrichtung ST erforderlich ist. Die für den Druck notwendigen Steuerdaten werden aufeinanderfolgend für jedes Arbeitsfeld an den Steuerdatenspeicher RO übertragen und liegen dort in einer Reihenfolge vor, die beim Ausdrucken eine optimierte Betriebsweise des Druckers ermöglicht.

Eine nach dem beschriebenen Verfahren die Steuerdaten aufbereitende Steuereinrichtung ST bildet somit eine "Grafikschnittstelle" für einen Matrixdrucker, welche es erlaubt, den Matrixdrukker wie einen Plotter zu betreiben.

Der Benutzer muss sich nicht mehr um eine optimale Arbeitsweise des Druckers kümmern. Die Grafikschnittstelle stellt ihm Prozeduren zur Verfügung, die wie beschrieben hinsichtlich der Arbeitsweise des Druckers optimierte Steuerdaten für diesen erzeugen. Solche Prozeduren sind "Bewege den Schreibkopf SK in eine bestimmte Position" (Tabulator), "Verbinde zwei Punkte miteinander" und gegebenenfalls "Schreibe Text ab einer bestimmten Position" sowie evtl. "Schreibe mit einer bestimmten Farbe". Diese Prozeduren sind aufgebaut aus elementaren Befehlen, wie z.B. "Schreibe eine bestimmte Punktfolge" oder "Schreibe ein bestimmtes Zeichen", die im Befehlssatz eines grafikfähigen Druckers üblicherweise enthalten sind.

## Patentansprüche

1. Verfahren zum Aufbereiten von Steuerdaten für einen Matrixdrucker zur Darstellung einer Reihe von Daten in Kurvenform auf einem Aufzeichnungsträger, welcher Matrixdrucker einen horizontal bewegbaren Schreibkopf (SK) mit in bezug auf seine Fortbewegungsrichtung senkrecht übereinander angeordneten einzeln ansteuerbaren Druckelementen (DN) aufweist, welche bei Fortbewegung des Schreibkopfes (SK) einen horizontal verlaufenden Schreibstreifen (S) auf dem Aufzeichnungsträger (PT) überstreichen, wobei die darzustellenden Daten (M) durch eine Reihe von jeweils durch zwei Werte in einem Koordinatensystem definierten Punkten gegeben sind, dadurch gekennzeichnet, dass die Daten (M) zunächst punktweise in Koordinatenwertepaare umgerechnet werden, die einem durch ein Druckelement (DN) in einem definierten Koordinatensystem auf dem Aufzeichnungsträger (PT) erzeugbaren Druckpunkt entsprechen, dass diese Koordinatenwertepaare hierauf schreibstreifenweise nach Paaren von aufeinanderfolgenden Punkten abgesucht werden, von denen wenigstens ein Punkt im betrachteten Schreibstreifen (S1, S2...) oder von denen ein Punkt oberhalb und ein Punkt unterhalb des betrachteten Schreibstreifens (S1, S2...) liegt, dass für zwei im gleichen Schreibstreifen (S1) liegende Punkte (5/6; 18/19; 19/20) eines Paares die Koordinatenwerte der eine wenigstens annähernd geradlinige Verbindung der beiden Punkte herstellenden Zwischenpunkte berechnet und die Koordinatenwerte sowohl der beiden Punkte als auch der Zwischenpunkte mit den Steuerbefehlen zur Erzeugung eines Druckpunktes ergänzt werden, dass für zwei Punkte (4/5; 6/7; 17/18) eines Paares, von denen einer oberhalb und der andere unterhalb oder nur einer im betreffenden Schreibstreifen (S1) liegt, ebenfalls die eine wenigstens annähernd geradlinige Verbindung der beiden Punkte herstellenden Zwischenpunkte berechnet, aber die Koordinatenwerte nur derjenigen Punkte und/oder Zwischenpunkte mit den Steuerbefehlen zur Erzeugung eines Druckpunktes ergänzt werden, die innerhalb des betreffenden Schreibstreifens (S1) liegen, dass sobald ein Paar von Punkten (7/8) auftritt, die nicht mehr im betrachteten Schreibstreifen (S1) liegen, dem letzten noch im Schreibstreifen (S1) liegenden Zwischenpunkt (B) des vorhergehenden Punktepaares (6/7) ein Tabulatorbefehl beigefügt wird, der den Schreibkopf (SK) zum ersten wieder im Schreibstreifen (S1) liegenden Zwischenpunkt (C) des nächsten wieder einen Punkt oder mindestens einen Zwischenpunkt im betrachteten Schreibstreifen (S1) aufweisenden Punktepaares (17/18) verschiebt und dass die so erzeugten Steuerdaten aufeinanderfolgend für jeden Schreibstreifen (S1, S2...) in einem Steuerdatenspeicher (RO) festgehalten werden, von wo sie dem Drucker für den Druckvorgang zugeführt werden können.

2. Verfahren nach Anspruch 1, dadurch gekennzeichnet, dass bei Vorliegen von verschiedenen je in einer Kurve darzustellenden Datenreihen aufeinanderfolgend die Steuerdaten für jeweils im betrachteten Schreibstreifen (S) liegende Kurvenabschnitte aufbereitet werden, wobei nach Bearbeitung eines Kurvenabschnittes jeweils als nächster der mit seinem Anfangspunkt am weitesten links liegende noch nicht bearbeitete Kurvenabschnitt bearbeitet wird.

3. Verfahren nach Anspruch 2, dadurch gekennzeichnet, dass die Steuerdaten für jeweils innerhalb eines einer bestimmten Anzahl erzeugbarer Druckpunkte entsprechenden Arbeitsfeldes (AF1, AF2...) liegende Kurvenabschnitte aufbereitet und anschliessend an den Steuerdatenspeicher (RO) übertragen werden.

4. Verfahren nach einem der vorangehenden Ansprüche, dadurch gekennzeichnet, dass nebst den genannten Zwischenpunkten nur jeweils der Anfangspunkt eines im betrachteten Schreibstreifen (S1) liegenden Punktepaares mit einem Druckbefehl für den Druckvorgang ergänzt wird.

5. Verfahren nach einem der vorangehenden Ansprüche, dadurch gekennzeichnet, dass zum Erzeugen bestimmter Farben alle Punkte eines Schreibstreifens zunächst mit einer ersten Farbe und anschliessend alle Punkte dieses Schreibstreifens noch einmal mit einer zweiten Farbe gedruckt werden, wobei die beiden Farben so gewählt sind, dass sie additiv die gewünschte Farbe ergeben.

**Revendications**

1. Procédé pour préparer des données de commande pour une imprimante matricielle pour la représentation d'une série de données sous la forme d'une courbe sur un support d'enregistrement, laquelle imprimante matricielle possède une tête d'écriture (ST) déplaçable horizontalement, comportant des éléments d'impression (DN) commandables individuellement, qui sont superposés perpendiculairement à sa direction de déplacement et qui, lors du déplacement de la tête d'écriture (SK), parcourent une bande d'enregistrement horizontale (S) sur le support d'enregistrement (PT), les données devant être représentées (M) étant déterminées par une série de points définis respectivement par deux valeurs dans un système de coordonnées, caractérisé par le fait que les données (M) sont d'abord converties, point par point, en des couples de valeurs de coordonnées qui correspondent à un point d'impression pouvant être produit par un élément d'impression (DN) dans un système défini de coordonnées situé sur le support d'enregistrement (PT), que ces couples de valeurs de coordonnées sont alors explorés, bande par bande, sous la forme de couples de points successifs, dont l'un au moins est situé dans la bande d'enregistrement considérée (S1, S2...) ou parmi lesquels un point est situé au-dessus et un point au-dessous de la bande d'enregistrement considérée (S1, S2...), que pour deux points (5/6; 18/19; 19/20) d'un couple, situés dans la même bande d'enregistrement (S1), les valeurs des coordonnées des points intermédiaires établissant une liaison au moins approximativement rectiligne entre les deux points sont calculées, et les valeurs des coordonnées aussi bien des deux points que des points intermédiaires sont complétées avec les instructions de commande pour l'obtention d'un point d'impression, que pour deux points (4/5; 6/7; 17/18) d'un couple, dont l'un est situé au-dessus et l'autre au-dessous de la bande d'enregistrement considérée (S1) ou bien dont un point seulement est situé dans cette bande, les points intermédiaires formant une liaison au moins approximativement rectiligne entre les deux points sont également calculés, mais les valeurs de coordonnées uniquement des points et/ou des points intermédiaires, qui sont situés à l'intérieur de la bande d'enregistrement considérée (S1), sont complétés par les instructions de commande servant à produire un point d'impression, que dès l'apparition d'un couple de points (7/8), qui ne sont plus situés dans la bande d'enregistrement considérée (S2), au dernier point intermédiaire (B), situé encore dans la bande d'enregistrement (S1), du couple présent de points (6/7) est adjointe une instruction de tabulateur qui déplace la tête d'écriture (SK) jusqu'au premier point intermédiaire (C), situé à nouveau dans la bande d'enregistrement (S1), du couple de points (17/18) immédiatement suivant, comprenant à nouveau un point ou au moins un point intermédiaire dans la bande d'enregistrement considérée (S1), et que les données de commande ainsi obtenues sont maintenues successivement pour chaque bande d'enregistrement (S1; S2...) dans une mémoire de données de commande (RO), d'où elles peuvent être envoyées à l'imprimante pour l'opération d'impression.

2. Procédé selon la revendication 1, caractérisé en ce que, lors de la présence de différentes séries de données devant être représentées respectivement par une courbe, les données de commande pour les sections de courbe situées respectivement dans la bande d'enregistrement considérée (S1) sont préparées, auquel cas, après élaboration d'une section de courbe, la section de courbe non encore élaborée, dont le point de départ est situé le plus à gauche, est traitée respectivement en tant que section de courbe immédiatement suivante.

3. Procédé suivant la revendication 2, caractérisé par le fait que les données de commande pour des sections de courbe situées respectivement à l'intérieur d'une zone de travail (AF1, AF2,...) correspondant à un nombre déterminé de points d'impression pouvant être produits, sont préparés et sont ensuite transmises à la mémoire de données de commande (RO).

4. Procédé suivant l'une des revendications précédentes, caractérisé par le fait qu'en-dehors des points intermédiaires indiqués, seul respectivement le point de départ d'un couple de points situés dans la bande d'enregistrement considérée (S1) est complété par une instruction d'impression pour l'opération d'impression.

5. Procédé suivant l'une des revendications précédentes, caractérisé par le fait que pour la production de couleurs déterminées, tous les points d'une bande d'enregistrement sont tout d'abord imprimés avec une première couleur, puis tous les points de cette bande d'enregistrement sont à nouveau imprimés avec une seconde couleur, les deux couleurs étant choisies de manière à fournir de façon additive la couleur désirée.

**Claims**

1. Method for the preparation of control data for a matrix printer for the representation of a series of data in curve form on a recording carrier, the matrix printer having a horizontally moveable writing head (SK) with individually controllable printing elements (DN) arranged perpendicularly above one another with reference to its progression direction, the printing elements with progression of the writing head (SK) spreading a horizontally extending writing strip (S) on the recording carrier (PT), the data (M) to be represented being given by a series of points in each case defined by two values in a coordinate system, characterized in that the data (M) are converted first of all point-wise into coordinate value pairs, which correspond to a printing dot which can be produced by a printing element (DN) in a defined coordinate system on the recording carrier (PT), in that these coordinate value pairs hereupon are searched on a writing strip basis for pairs of successive points, of which at least one point lies in the observed writing strip (S1, S2...) or of which one point lies above and one point below the observed writing strip (S1, S2...), in that for two points (5/6; 18/19; 19/20) of a pair, lying in the same writing strip (S1), the coordinate values of the intermediate points, producing a connection of the two points which is at least approximately straightlined, are calculated and the coordinate values both of the two points and of the intermediate points are supplemented with the control commands for the production of a printing dot, in that for two dots (4/5; 6/7; 17/18) of a pair, one of which lies above and the other below or only one in the respective writing strip (S1), likewise the intermediate points, producing a connection of the two points which is at least approximately straight-lined, are calculated, but only the coordinate values of those points and/or intermediate points are supplemented with the control commands for the production of a printing dot which lie within the respective writing strip (S1), in that as soon as a pair of points (7/8) occurs which no longer lie in the observed writing strip (S1), a tabulator command is added to the last intermediate point (B) of the preceding point pair (6/7) still lying in the writing strip (S1), the tabulator command displacing the writing head (SK) to the first intermediate point (C), again lying in the writing strip (S1), of the next point pair (17/18) again having a point or at least an intermediate point in the observed writing strip (S1), and in that the control data produced in this way are successively held for each writing strip (S1, S2...) in a control data store (RO), from where they can be supplied to the printer for the printing process.

2. Method according to claim 1, characterized in that with the presence of various data rows, each to be represented in a curve, the control data are successively prepared for curve sections, in each case lying in the observed writing strip (S), whereby after the processing of a curve section in each case as the next one the curve section not yet processed lying furthest to the left with its starting point is processed.

3. Method according to claim 2, characterized in that the control data for curve sections, in each case lying within a working field (AF1, AF2...) corresponding to a certain number of printing dots which can be produced, are prepared and subsequently transmitted to the control data store (RO).

4. Method according to one of the preceding claims, characterized in that in addition to the named intermediate points only in each case the starting point of a point pair lying in the observed writing strip (S1) is supplemented with a printing command for the printing process.

5. Method according to one of the preceding claims, characterized in that to produce certain colours all points of a writing strip are printed first of all with a first colour and subsequently all points of this writing strip are once more printed with a second colour, the two colours being chosen so that they give the desired colour cumulatively.

## FIG. 1

## FIG. 3

FIG. 2

FIG. 4